# EUROPEAN PATENT APPLICATION

(11) **EP 1 235 206 A2**
(43) Date of publication of application: **28.08.2002**
(21) Application number: 02251278.4
(22) Date of filing: 25.02.2002
(51) Int. Cl.: G11B 5/48

(54) **Swing arm assembly**

(30) Priority: 23.02.2001 JP 2001048614; 17.04.2001 JP 2001118758
(71) Applicant: Minebea Kabushiki Kaisha, Kitasaku-gun, Nagano-ken (JP)
(72) Inventor: Koyama, Toshisada, c/o Minebea Kabushiki-kaisha, Kitasaku-gun, Nagano-ken (JP)
(74) Representative: Johnstone, Douglas Ian

(57) **Abstract**

A swing arm assembly comprising a support member or shaft (12) disposed perpendicularly to a casing base (7a) of a hard disc drive device, inner rings (13a, 14a) disposed around the support member (12), and outer rings (13b, 14b) surrounding the inner rings (13a, 14a) with upper and lower rows (8, 9) of balls interposed therebetween. A swing arm (2) is fitted and secured by means of a base hole thereof around an outer peripheral surface of at least one of the outer rings (13b, 14b). Manufacturing costs of a hard disc drive incorporating the assembly are reduced as a consequence of a reduction in the number of components and ease of assembly.

## Description

The present invention concerns a swing arm assembly for supporting a magnetic head shiftably within the hard disk drive device. More particularly, the present invention relates to a swing arm assembly of single arm type.

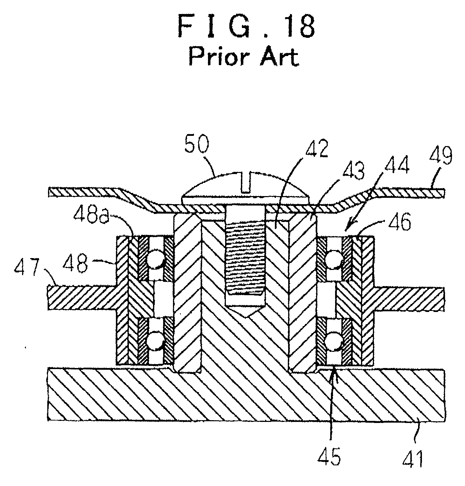

Within the category of the hard disk drive device, a device of low cost type is included in which the read-write operation is effected only on one side of an magnetic disk. The hard disk drive device of this type includes a single magnetic head for read-write operation of data and a single swing arm supporting the magnetic head shiftably. Such an arrangement of the swing arm is referred to as a single arm. The swing arm assembly of the single arm type of the prior art is illustrated in Fig. 18.

In Fig. 18, the reference numeral 41 denotes a base of the hard disk drive device, the reference numeral 42 denotes a support shaft extending upwardly from the bottom surface of the base. The swing arm assembly of the prior art includes a cylindrical sleeve shaft 43 to be fit around the support shaft 42, a pair of upper and lower ball bearings 44, 45 attached through the inner rings thereof to the outer periphery of the sleeve shaft, and a cylindrical bearing holder 46 attached around the outer races of the ball bearings. The swing arm 47 is fit around the outer periphery of the bearing holder 46 at the bore 48a of its cylindrical fitting portion 48 formed through the base thereof.

The reference numeral 49 of Fig. 18 denotes a top plate of the hard disk drive device, and the reference numeral 50 denotes a screw securing the top plate on said support shaft 42.

In the above described swing arm assembly of the prior art, said bearing holder 46 is adapted to be interposed between the ball bearings 44, 45 and the cylindrical fitting portion 48 of the swing arm so that the required precision on processing and assembling of the bearing holder 46 are substantially identical with those of the upper and lower ball bearings.

In this connection the cost for manufacturing the structure for supporting the swing arm of the hard disk drive device of low cost type in which the only one swing arm is to be supported is not so different from that required for the support structure of the hard disk drive device including a plurality of swing arms. As can be seen from above, the precision required for the bearing holder inhibits the reduction of the cost for manufacturing the hard disk drive device.

Since it is necessary to provide on the base of the swing arm with the cylindrical fitting portion 48 for example by die casting for mounting the swing arm around the outer periphery of said bearing holder, the cost for processing the swing arm itself is also not so different from that required for processing that of the hard disk drive device including a plurality of swing arms. This also inhibits the reduction of the cost for manufacturing the hard disk drive device.

Accordingly the object of the present invention is to provide a swing arm assembly reduced in the number of the component parts, facilitated in its assembly, and can be expected in the reduction of the manufacturing cost thereof and thus providing a hard disk drive device of lower cost.

These and other objects are accomplished by a swing arm assembly comprising, a support member extending vertically upwardly from a casing base of a hard disk drive device, an inner ring member disposed around the support member, and an outer ring member surrounding the inner ring member with interposing upper and lower rows of balls therebetween, wherein the swing arm is fit and secured at its base hole around the outer peripheral surface of the outer ring member.

In the swing arm assembly in accordance with the other feature, the outer ring member is provided on its outer peripheral surface with an upper reduced diameter portion and an enlarged diameter recaiving portion. In such a case, the swing arm is adapted to be fit and secured at its base hole around the reduced diameter portion of the outer ring member and the lower surface around the base hole is received by said receiving portion.

In the swing arm assembly in accordance with the other feature, the outer ring member may comprise upper and lower outer rings, and the upper outer ring is smaller in its diameter than the lower outer ring.

In the swing arm assembly in accordance with the other feature, the base hole may be fit around the outer periphery of said upper outer ring, and the lower surface around the base hole is received by a portion of the top end surface of the lower outer ring extending outwardly from the boundary of the upper outer ring.

In the swing arm assembly in accordance with the other feature, a reduced diameter stepped portion of the outer diameter larger than that of the upper outer ring is formed around the upper shoulder of the lower outer ring. In such a case, the swing arm is fit at its base hole around a vertical outer peripheral surface of the reduced diameter stepped portion, and the lower surface around the base hole is received by a horizontal surface of said reduced diameter stepped portion.

In the swing arm assembly in accordance with the other feature, the outer ring member may comprise a one-piece sleeve outer ring including over the upper portion thereof a thin reduced outer diameter portion and over the lower portion thereof a thick enlarged outer diameter portion. In such a case, the swing arm is fit at its base hole around an outer peripheral surface of said reduced diameter portion, and the lower surface around the base hole is received by an enlarged diameter stepped portion defined between said reduced diameter portion and said enlarged diameter portion.

In the swing arm assembly in accordance with the other feature, the outer ring member may comprise upper and lower outer rings and a spacer interposed therebetween, in such a case, the upper outer ring and the spacer is smaller in their diameter than that of the lower outer ring.

In the swing arm assembly in accordance with the other feature, the swing arm may be fit at its base hole around an outer periphery of said spacer, and the lower surface around the base hole is received by a portion of the top end surface of the lower outer ring extending outwardly from the boundary of the spacer.

In the swing arm assembly in accordance with the other feature, a reduced diameter stepped portion of the outer diameter larger than that of said spacer may be formed around the upper shoulder of the lower outer ring, and wherein the swing arm is fit at its base hole around a vertical outer peripheral surface of the reduced diameter stepped portion, and the lower surface around the base hole is received by a horizontal surface of said reduced diameter stepped portion.

In the swing arm assembly in accordance with the other feature, the support member may be a support shaft provided on the casing base of the hard disk drive device to extend upwardly therefrom.

In the swing arm assembly in accordance with the other feature, the support member may be a sleeve shaft fit around the support shaft provided on the casing base of the hard disk drive device to extend upwardly therefrom.

Further feature of the present invention will become apparent to those skilled in the art to which the present invention relates from reading the following specification with reference to the accompanying drawings, in which:
Fig. 1 is a plan view showing the internal structure of the hard disk drive device equipped with the swing arm assembly of the present invention;
Fig. 2 is a vertical cross-sectional view showing the swing arm assembly of the first embodiment in accordance with the present invention;
Fig. 3 is a vertical cross-sectional view showing the swing arm assembly of the second embodiment in accordance with the present invention;
Fig. 4 is a vertical cross-sectional view showing the swing arm assembly of the third embodiment in accordance with the present invention;
Fig. 5 is a vertical cross-sectional view showing the swing arm assembly of the fourth embodiment in accordance with the present invention;
Fig. 6 is a vertical cross-sectional view showing the swing arm assembly of the fifth embodiment in accordance with the present invention;
Fig. 7 is a vertical cross-sectional view showing the swing arm assembly of the sixth embodiment in accordance with the present invention;
Fig. 8 is a vertical cross-sectional view showing the swing arm assembly of the seventh embodiment in accordance with the present invention;
Fig. 9 is a vertical cross-sectional view showing the swing arm assembly of the eighth embodiment in accordance with the present invention;
Fig. 10 is a vertical cross-sectional view showing the swing arm assembly of the ninth embodiment in accordance with the present invention;
Fig. 11 is a vertical cross-sectional view showing the swing axm assembly of the tenth embodiment in accordance with the present invention;
Fig. 12 is a vertical cross-sectional view showing the swing arm assembly of the eleventh embodiment in accordance with the present invention;
Fig. 13 is a vertical cross-sectional view showing the swing arm assembly of the twelfth embodiment in accordance with the present invention;
Fig. 14 is a vertical cross-sectional view showing the swing arm assembly of the thirteenth embodiment in accordance with the present invention;
Fig. 15 is a vertical cross-sectional view showing the swing arm assembly of the fourteenth embodiment in accordance with the present invention;
Fig. 16 is a vertical cross-sectional view showing the swing arm assembly of the fifteenth embodiment in accordance with the present invention;
Fig. 17 is a vertical cross-sectional view showing the swing arm assembly of the sixteenth embodiment in accordance with the present invention; and
Fig. 18 is a vertical cross-sectional view showing the swing arm assembly of the prior art.

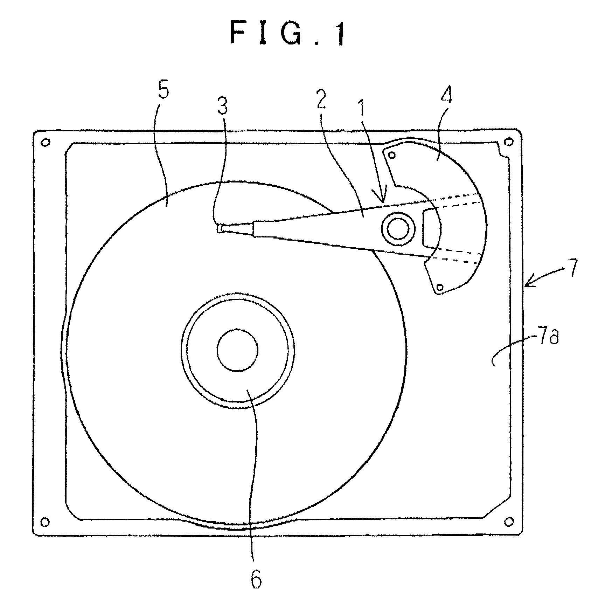

A swing arm assembly in accordance with the present invention will now be described on the basis of the concrete examples as shown in Figs. 1-17 in which a plurality of embodiments are illustrated.

Illustrated in Fig. 1 is the internal structure of the hard disk drive device including a swing arm 1 of the present invention.

As can be seen from Fig. 1, a swing arm designated by the reference numeral 2 is adapted to be turned to any desired position by a drive means 4 so as to shift a magnetic head designated by the reference numeral 3 in the radial direction of the magnetic disk 5 through the turning operation of the swing arm.

A motor for driving the magnetic disk designated by the reference numeral 6, and a casing of the hard disk drive device designated by the reference numeral 2 are also included in Fig. 1.

The present invention is intended to improve the hard disk drive device as shown in Fig. 1, and embodiments thereof will now be described hereinbelow.

### THE FIRST EMBODIMENT

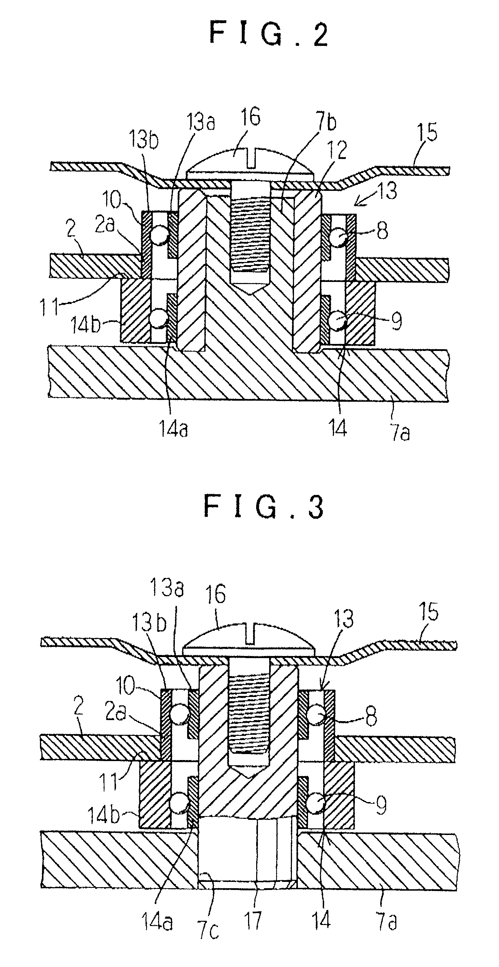

The swing arm assembly 1 of the first embodiment as shown in Fig. 2 includes a cylindrical sleeve shaft 12 or a support member disposed around a support shaft 7b integrally formed with the base 7a of the casing 7 to protrude therefrom, and upper and lower bearings 13, 14. The upper bearing 13 includes an inner ring 13a mounted around said shaft 12, an outer ring 13b, and an upper row 8 of a plurality of balls interposed therebetween. The lower bearing 14 also includes an inner ring 14a mounted around said sleeve shaft 12, an outer ring 14b, and a lower row 9 of a plurality of balls interposed therebetween. The upper and lower inner rings 13a, 14a form said inner ring member of the swing arm assembly, and the upper and lower outer rings 13b, 14b form said outer ring member of the swing arm assembly.

In the swing arm assembly of the first embodiment, the outer ring 13b of the upper bearing 13 is extended downwardly longer than the corresponding inner ring 13a, and the outer ring 14b of the lower bearing 14 is extended upwardly longer than the corresponding inner ring 14a. The opposite end surfaces of the upper and lower outer rings 13b, 14b are processed in high precision so as to contact intimately with each other.

Although the upper and lower outer ring 13b, 14b are equal in their inner diameter, the lower outer ring 14b is enlarged in its outer diameter relative to the upper outer ring 13b, so that the outer periphery of the upper outer ring provides a reduced diameter portion 10 of the outer ring member, and the upper end surface of the lower outer ring 14b extending outwardly from the upper outer ring 13b provides a receiving portion 11. In such a structure, the swing arm 2 may be fit at its base hole 2a around the outer periphery of the upper outer ring 13b i.e. the reduced diameter portion 10 of the outer ring member, and the lower surface of the swing arm may be secured for example by adhesive on the upper end surface of the lower outer ring 14b, i.e. the receiving portion 11 of the outer ring member. The swing arm can thus be received stably by the receiving portion.

In the swing arm assembly of the first embodiment arranged as described above, a finished swing arm assembly is provided through the bearing manufacturer by securing around the sleeve shaft 12 the one inner ring of either the upper or lower bearing 13, 14 for example by adhesive, and the other inner ring also for example by adhesive with providing suitable pre-load from the end surface of the one inner ring, and then incorporating the swing arm. On the side of the hard disk manufacturer, the sleeve shaft 12 of thus obtained assembly is fit around the support shaft 7b of the base 7a, any other parts of the hard disk drive device are incorporated, and finally the top plate 15 of the hard disk drive device is disposed on the casing and screwed thereon.

In order to ensure the fixation to the support shaft 7b of the boss, the top plate 15 is also fixed on the top end of the support shaft 7b by means of screw 16 and urging the lower surface of the top plate 15 against the top end surface of the sleeve shaft 12.

### THE SECOND EMBODIMENT

The swing arm assembly of the second embodiment will now be described with reference to Fig. 3. The second embodiment is different from the above-mentioned first embodiment except for the structure of the support member,

Although the swing arm assembly of the first embodiment has, a structure in which the support member formed as the cylindrical sleeve shaft 12 is attached to the support shaft 7b extending upwardly from the base 7a of the hard disk drive assembly, the swing arm assembly of the second embodiment has a structure in which the support member formed by a straight support shaft 17 is fitted and secured at its lower end portion into a hole 7c provided through the casing base. In such a structure, the swing arm assembly of the second embodiment does not need to form the support shaft 7b on the casing base to protrude therefrom, and it is sufficient to form the hole 7c for mounting the support shaft, so that the substantial advantage on the manufacturing of the hard disk drive device that the casing can be processed easily can be obtained.

The swing arm assembly of this second embodiment is substantially identical to the first embodiment except for the structure of the support member.

### THE THIRD EMBODIMENT

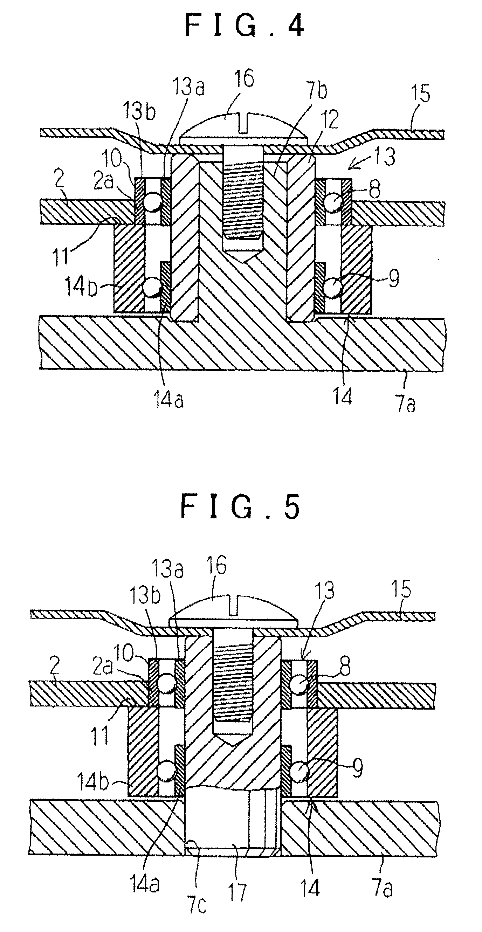

The swing arm assembly of the third embodiment will now be described with reference to Fig. 4. The third embodiment is different from the above-mentioned first embodiment in the structure of the outer ring member.

Concretely, the inner and outer rings 13a, 13b of the upper bearing 13 are equal in their axial length, and the axial length of the lower outer ring 14b is extended correspondingly.

In the structure of the third embodiment, the upper bearing can be a generic radial bearing, so that further reduction of the manufacturing cost can be expected.

The swing arm assembly of this third embodiment is substantially identical to the first embodiment except for the structure of the outer ring member.

### THE FOURTH EMBODIMENT

The swing arm assembly of the fourth embodiment will now be described with reference to Fig. 5. The fourth embodiment is different from the above-mentioned third embodiment in the structure of the support member.

Although the swing arm assembly of the third embodiment has a structure in which the support member formed as the cylindrical sleeve shaft 12 is attached to the support shaft 7b extending upwardly from the base 7a of the hard disk drive assembly, the fourth embodiment has as with the above mentioned second embodiment a structure in which the support member formed by a straight support shaft 17 is fitted and secured at its lower end portion into a hole 7c provided through the base 7a. In such a structure, the swing arm assembly of the fourth embodiment does not need to form the support shaft 7b on the casing base to protrude therefrom as that of the first embodiment, and it is sufficient to form the hole 7c for mounting the support shaft, so that the substantial advantage on the manufacturing of the hard disk drive device that the casing can be processed easily can be obtained.

The swing arm assembly of this fourth embodiment is substantially identical to the third embodiment except for the structure of the support member.

### THE FIFTH EMBODIMENT

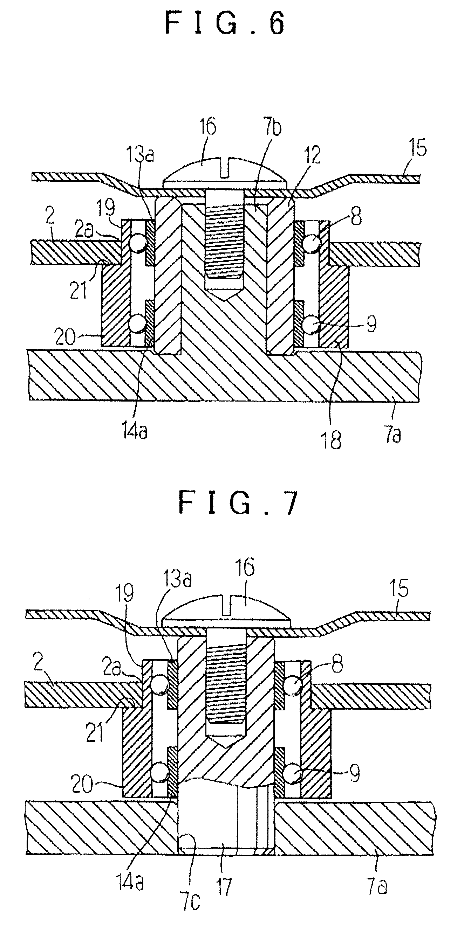

The swing arm assembly of the fifth embodiment will now be described with reference to Fig. 6. The fifth embodiment is further different from the above-mentioned first to fourth embodiments in the structure of the outer ring member. The outer ring member of the fifth embodiment is formed by a single elongated sleeve outer ring 18.

The sleeve outer ring 18 is an integrally formed member including the function of upper and lower outer rings 13b, 14b of the first to fourth embodiments. The sleeve outer ring includes an upper reduced diameter portion 19, a thickened enlarged diameter portion 20, and a receiving portion 21 defined as an enlarged diameter stepped portion between the reduced and enlarged diameter portions. The swing arm 2 is fit at its base hole 2a around the outer periphery of the upper reduced diameter portion 19, and the lower surface of the swing arm may be secured for example by means of adhesive on said receiving portion 21. The swing arm can thus be received stably by the receiving portion.

In accordance with the fifth embodiment, the outer ring member is defined as a single sleeve outer ring 18, the number of the parts can be reduced relative to the first to the fourth embodiments in which the outer ring member includes two ring members. The process steps required for assembling the device can also be reduced.

The swing arm assembly of this fifth embodiment is substantially identical to the first and the third embodiments except for the structure of the outer ring member.

### THE SIXTH EMBODIMENT

The swing arm assembly of the sixth embodiment will now be described with reference to Fig, 7. The sixth embodiment is different from the above-mentioned fifth embodiment in the structure of the support member.

Although the swing arm assembly of the fifth embodiment has a structure in which the support member formed as the cylindrical sleeve shaft 12 is attached to the support shaft 7b extending upwardly from the inner bottom surface of the casing base 7 of the hard disk drive assembly, the swing arm assembly of the sixth embodiment has as with the above mentioned second and the fourth embodiments a structure in which the support member formed by a straight support shaft 17 is fitted and secured at its lower end portion into a hole 7c provided through the base 7a. In such a structure, the swing arm assembly of the sixth embodiment does not need to form the support shaft 7b on the casing base 7a to protrude therefrom as that of the fifth embodiment, and it is sufficient to form the hole 7c for mounting the support shaft, so that the substantial advantage on the manufacturing of the hard disk drive device that the casing can be processed easily can be obtained.

The swing arm assembly of this sixth embodiment is substantially identical to the fifth embodiment except for the structure of the support member.

### THE SEVENTH EMBODIMENT

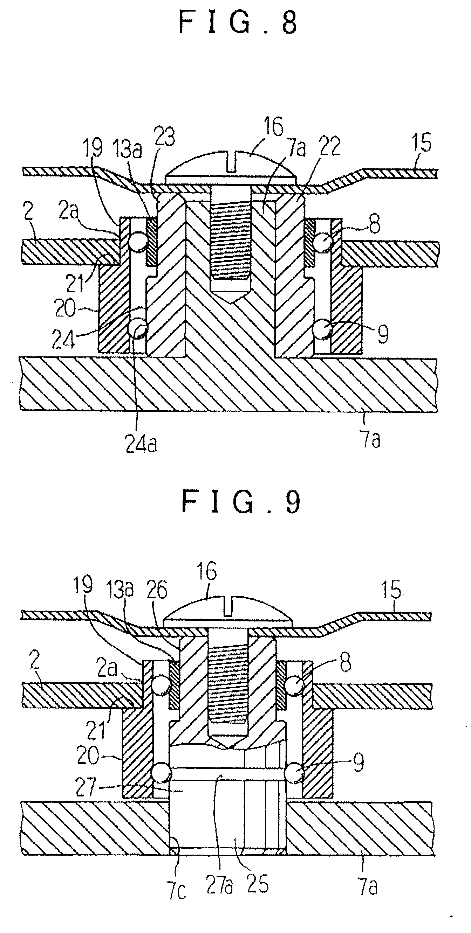

The swing arm assembly of the seventh embodiment will now be described with reference to Fig. 8, The seventh embodiment is different from the above-mentioned sixth embodiment in the structure of the inner ring member. In the inner ring member of the seventh embodiment, the sleeve shaft 22 serves also as a lower inner ring.

The sleeve shaft 22 is formed as a stepped shaft including on its outer periphery an upper reduced diameter portion 23 and a lower enlarged diameter portion 24. The upper inner ring 13a is adapted to be attached around the reduced diameter portion 23. An inner ring raceway groove 24a for the lower row 9 of balls is formed directly around the enlarged diameter portion 24. The outer diameter of the enlarged diameter portion is the same as that of the inner ring fitted around the reduced diameter portion so that the balls of the same diameter can be employed in the upper and lower rows.

In accordance with the seventh embodiment, the lower inner ring member is formed integral with the sleeve shaft 22, so that the number of the parts can be reduced relative to that of the fifth embodiment in which two inner rings are employed. The process for assembling the device can thus be reduced further.

The swing arm assembly of this seventh embodiment is substantially identical to the fifth embodiment except for the structure of the inner ring member.

### THE EIGHTH EMBODIMENT

The swing arm assembly of the eighth embodiment will now be described with reference to Fig. 9. The eighth embodiment is different from the above-mentioned seventh embodiment in the structure of the support member.

Although the swing arm assembly of the seventh embodiment has a structure in which the support member or the sleeve shaft 22 functioned also as a lower inner ring is attached to the support shaft 7b extending upwardly from the base 7a of the hard disk drive assembly, the swing arm assembly of the eighth embodiment has a structure in which the support member formed by a stepped shaft 25 is fitted and secured at its lower end portion into a hole 7c provided through the base 7a.

The stepped shaft 25 includes an upper reduced diameter portion 26 and a lower enlarged diameter portion 27. The upper inner ring 13a is adapted to be fitted around the reduced diameter portion 26. An inner ring raceway groove 27a for the balls of the lower row 9 is formed directly around the outer peripheral surface of the enlarged diameter portion 27. The outer diameter of the enlarged diameter portion is identical with that of the inner ring, so that the balls of the same diameter can be used as balls of the upper and lower rows 8, 9.

The swing arm assembly of the eighth embodiment does not need to form the support shaft 7b on the base 7a to protrude therefrom, and it is sufficient to form the hole 7c for mounting the support shaft, so that the substantial advantage on the manufacturing of the hard disk drive device that the casing can be processed easily can be obtained.

The swing arm assembly of this eighth embodiment is substantially identical to the seventh embodiment except for the structure of the support member.

### THE NINTH EMBODIMENT

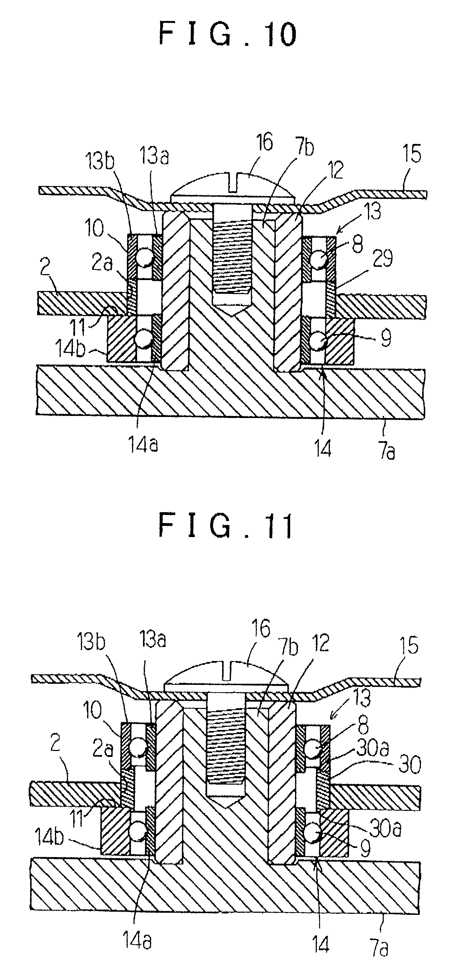

The swing arm assembly of the ninth embodiment as shown in Fig. 10 includes an outer ring member comprising upper and lower outer rings 13b, 14b, and a cylindrical spacer 29 interposed between the rings. The both end surfaces of the spacer and the end surface of each of the upper and lower outer rings opposite to the either end surface of the spacer respectively are processed in high precision, and the spacer is connected to the upper and lower outer rings by such a means as an adhesive bonding.

The spacer has an outer diameter identical with that of the upper outer ring 13b, and the lower outer ring 14b has an outer diameter substantially larger than that of the spacer. A portion of the upper end surface of the lower outer ring extending outwardly from the boundary of the spacer 29 forms a receiving portion 11. In such a structure, the swing arm 2 may be fit at its base hole 2a around the outer periphery of the spacer 29, and the lower surface of the swing arm may be secured for example adhesive on the upper end surface of the lower outer ring 14b, i.e, the receiving portion 11 of the outer ring member. Thus the swing arm is received stably by the receiving portion.

The swing arm assembly of the ninth embodiment is substantially identical to the first embodiment as shown in Fig. 2 except for the structure of the outer ring member.

### THE TENTH EMBODIMENT

The swing arm device of the above mentioned ninth embodiment has a structure in which the lower end surface of the upper ring and the upper end surface of the lower outer ring are connected for example by adhesive on the corresponding end surface of the spacer 29. The swing arm device of the tenth embodiment as shown in Fig. 11 is modified in the structure of the spacer. The spacer 30 of the tenth embodiment includes reduced diameter engaging portions 30a, 30b formed on each end thereof. These reduced diameter engaging portions have an outer diameter substantially identical to the inner diameter of the upper and lower outer rings. The inner side of the upper and lower outer rings are adapted to be engaged with the upper and lower reduced diameter engaging portions.

In such a structure the following advantages can be obtained. The alignment of the components of the outer ring member such as the spacer 30 and the upper and lower outer rings 13b, 14b can be effected easily, and it is unnecessary to secure the components with each other.

In the illustrated embodiment, the spacer has upper and lower reduced diameter engaging portions at its upper and lower end. Whereas the spacer may include one reduced diameter engaging portion on either of the upper or lower end thereof. In such a case, the advantage that the alignment of the components of the outer ring member can be effected easily can also be preserved.

The swing arm assembly of the tenth embodiment is substantially identical to the ninth embodiment as shown in Fig. 10 except for the structure of the spacer.

### THE ELEVENTH EMBODIMENT

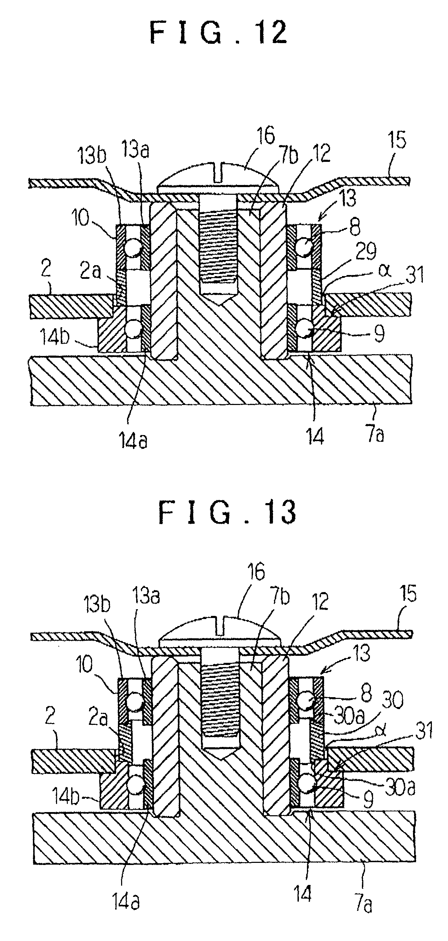

The swing arm device of the eleventh embodiment will now be described with reference to Fig. 12. The eleventh embodiment is different from the ninth embodiment as shown in Fig. 10 in the structure for mounting the swing arm 2.

In the above-mentioned ninth embodiment, the swing arm 2 is fit at its base hole 2a around the outer periphery of the spacer 29, and the lower surface of the swing arm is received on the upper end surface of the lower outer ring 14b. Whereas, in the eleventh embodiment, the swing arm 2 is fit at its base hole 2a around a reduced diameter stepped portion 31 formed around the upper shoulder of the lower outer ring 14b, and the lower surface of the swing arm is received on the horizontal surface of the stepped portion.

The outer diameter of the reduced diameter stepped portion 31 is larger than that of the spacer 29 so that the a clearance a is formed between the base hole 2a of the swing arm and the outer peripheral surface of the spacer 29.

Although in the ninth embodiment the process of high precision should be made on the outer peripheral surface of the spacer to which the swing arm will abut and on the upper end surface of the lower outer ring, in the eleventh embodiment the precision of the process to be made on the outer peripheral surface of the spacer is not an important subject. Thus the management on the precision of the component part can be effected easily.

The swing arm assembly of this eleventh embodiment is substantially identical to the ninth embodiment except for the reduced diameter stepped portion 31 formed around the lower outer ring 14b and the structure for mounting the swing arm.

### THE TWELFTH EMBODIMENT

The swing arm device of the above mentioned eleventh embodiment has a structure in which the lower end surface of the upper ring and the upper end surface of the lower outer ring are connected for example by adhesive on the corresponding end surface of the spacer 29. The swing arm device of the twelfth embodiment as shown in Fig, 13 is as with the tenth embodiment as shown in Fig. 11, modified in the structure of the spacer. The spacer 30 of the twelfth embodiment includes reduced diameter engaging portions 30a, 30b formed on each end thereof. These reduced diameter engaging portions have an outer diameter substantially identical with the inner diameter of the upper and lower outer rings. The inner side of the upper and lower outer rings are adapted to be engaged with the upper and lower reduced diameter engaging portions.

In such a structure the following advantages can be obtained. The alignment of the components of the outer ring member such as the spacer 30 and the upper and lower outer rings 13b, 14b can be effected easily, and it is unnecessary to secure the components with each other.

In the illustrated embodiment as with the tenth embodiment the spacer has upper and lower reduced diameter engaging portions at its upper and lower end. Whereas the spacer may include one reduced diameter engaging portion on either of the upper or lower end thereof. In such a case, the advantage that the alignment of the components of the outer ring member can be effected easily can also be preserved.

The swing arm assembly of the twelfth embodiment is substantially identical to the eleventh embodiment as shown in Fig. 12 except for the structure of the spacer.

### THE THIRTEENTH EMBODIMENT

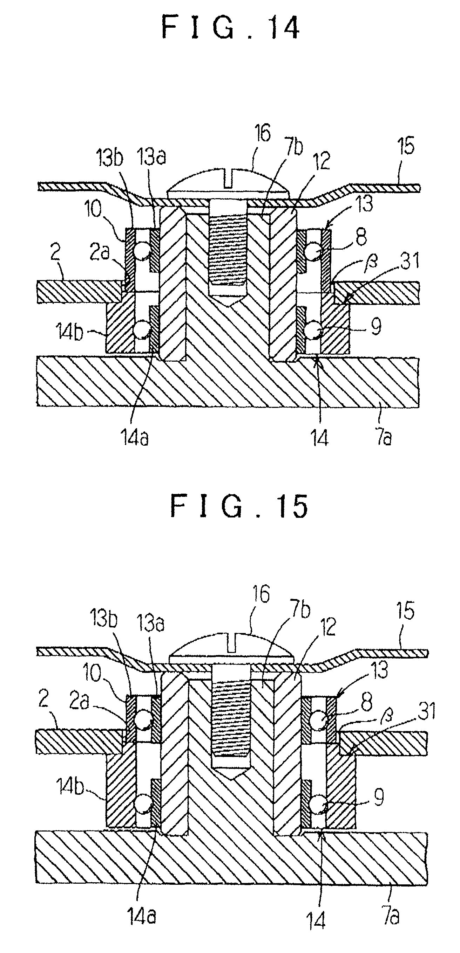

The swing arm assembly of the thirteenth embodiment as shown in Fig. 14 can be obtained by applying the structure of the eleventh embodiment as shown in Fig. 12 for mounting the swing arm 2 to that of the first embodiment as shown in Fig. 2.

In the above mentioned first embodiment, the swing arm 2 may be fit at its base hole 2a around the outer peripheral surface of the upper outer ring 13b, and the lower surface of the swing arm may be received on the upper end surface of the lower outer ring 14b. Whereas, in the thirteenth embodiment, the swing arm 2 may be fit at its base hole 2a around a reduced diameter stepped portion 31 formed around the upper shoulder of the lower outer ring 14b, and the lower surface of the swing arm may be received on the horizontal surface of the stepped portion.

The outer diameter of the reduced diameter stepped portion 31 is larger than that of the upper outer ring 13b so that the a clearance β is formed between the base hole 2a of the arm and the outer peripheral surface of the upper outer ring.

Although in the ninth embodiment the process of high precision should be made on the outer peripheral surface of the upper outer ring to which the swing arm will abut and on the upper end surface of the lower outer ring, in the thirteenth embodiment the precision of the process to be made on the outer peripheral surface of the upper outer ring is not an important subject. Thus the management on the precision of the component part can be effected easily.

The swing arm assembly of this thirteenth embodiment is substantially identical to the first embodiment except for the reduced diameter stepped portion 31 formed around the lower outer ring 14b and the structure for mounting the swing arm.

### THE FOURTEENTH EMBODIMENT

The swing arm assembly of the thirteenth embodiment can be obtained by applying the structure of the lower outer ring 14b and the structure for mounting the swing arm 2 of the eleventh embodiment to that of the first embodiment. Whereas the swing arm assembly of the fourteenth embodiment as shown in Fig. 15 can be obtained by applying the structure of the lower outer ring and the structure for mounting the swing arm 2 of the eleventh embodiment to that of the third embodiment as shown in Fig. 4.

To say concretely, the only difference between the thirteenth and the fourteenth embodiments is that the inner and outer rings 13a, 13b of the upper bearing 13 are made equal in their axial length, and the axial length of the lower outer ring 14b is extended correspondingly. These embodiments are identical in the other structural features.

Although the sleeve shaft 12 is adopted as the support member in the 9-14 embodiments, the stepped shaft as illustrated in the second embodiment as shown in Fig. 3 can also be adopted.

### THE FIFTEENTH EMBODIMENT

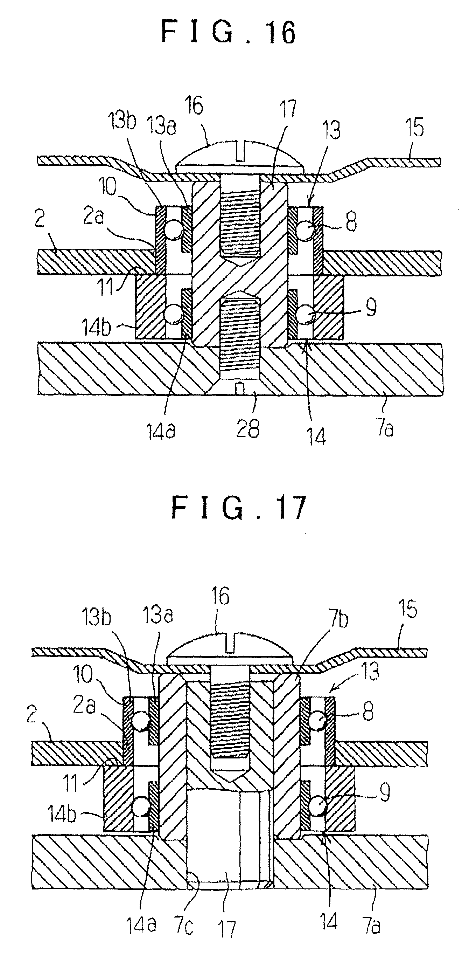

In the above-mentioned embodiments, the support member is formed as the support shaft 7b integrally formed with the base 7a to protrude therefrom, or support shaft 17 or stepped shaft 25 is fitted and secured into a hole 7c provided through the base 7a. Whereas the support member can be formed as the support shaft 17 secured to the base by means of a countersunk screw 28 extending through the base from the bottom side thereof as in the fifteenth embodiment as shown in Fig. 16.

The inner and outer ring members of the fifteenth embodiment are identical in their structure with those of the second embodiment. The support shaft or the stepped shaft of the other embodiments can also be secured on the base 7a by means of the screw as was made in the fifteenth embodiment.

### THE SIXTEENTH EMBODIMENT

In the above-mentioned embodiments, a sleeve shaft 12 is mounted around the support shaft 7b protruding integrally from the base 7a, or an inner ring member is mounted directly around the support shaft 17. Whereas, the sleeve shaft 12 can be attached around the support shaft 17 secured to the base to extend therefrom.

In the above mentioned embodiments, seal rings (not shown) are provided in each bearing, or labyrinth seals (not shown) are provided on the upper and the lower end of the receiving portion to prevent the leakage of the lubricant packed around the upper and lower rows 8, 9 of balls of the swing arm assembly.

The swing arm assembly in accordance with the present invention has a structure in which the swing arm is connected directly around the outer periphery of the outer ring member so that it is unnecessary to interpose the bearing holder between the outer ring member and the swing arm as in the prior art. Thus the number of the indispensable part of the assembly can be reduced relative to the swing arm asseaibly of the prior art.

Further, the swing arm can be fit around the reduced diameter portion of the outer ring member at its hole extending through the base of the swing arm, and the lower surface of the swing arm around the hole can be secured for example by adhesive on the receiving portion of the outer ring member. Thus the swing arm is received stably by the receiving portion. In this connection, it is unnecessary to form a cylindrical portion for fitting on the base of the swing arm as was provided in the structure of the prior art. The cost for manufacturing the swing arm itself can be reduced thereby.

With respect to the outer ring member comprising two components such as upper and lower outer rings, or that comprising three components such as upper and lower outer rings and spacer, the base of the swing arm is attached to a reduced diameter stepped portion formed around the upper shoulder of the lower outer ring with fitting the hole provided through the base of the swing arm over the vertical surface of the reduced diameter stepped portion and the lower surface of the swing arm is received stably by the horizontal surface of the reduced diameter stepped portion. Thus it is not necessary to process the outer peripheral surface of the upper outer ring or the spacer precisely. The cost for manufacturing the swing arm itself can also be reduced thereby.

In conclusion, the hard disk drive device of the low cost type can be manufactured in lower cost without affecting the precision of the swinging movement of the swing arm.

While particular embodiments of the present invention have been illustrated and described, it should be obvious to those skilled in the art that various changes and modifications can be made without departing from the scope of the invention as defined in the claims.

References in the specification to vertical, horizontal, top, bottom etc. merely relate to orientations as shown in the figures and should not be considered to limit the orientations of the components concerned. Where one component is described as being horizontal and another vertical they should merely be considered to be at least substantially perpendicular to each other.

## Claims

1. A swing arm assembly comprising:
a support member extending vertically upwardly or substantially perpendicularly from a casing base of a hard disc drive device;
an inner ring member disposed around the support member; and
an outer ring member surrounding the inner ring member with interposing upper and lower rows of balls therebetween,
wherein the swing arm is fitted and secured by a base hole thereof around an outer peripheral surface of the outer ring member.

2. The swing arm assembly according to claim 1, wherein said outer ring member is provided on its outer peripheral surface with an upper reduced diameter portion and an enlarged diameter receiving portion, and wherein the swing arm is adapted to be fitted and secured by means of the base hole around the reduced diameter portion of the outer ring member and a lower surface around the base hole is received by said receiving portion.

3. The swing arm assembly according to claim 2, wherein said outer ring member comprises upper and lower outer rings, and the upper outer ring is smaller in diameter than the lower outer ring.

4. The swing arm assembly according to claim 3, wherein the base hole is fitted around the outer periphery of said upper outer ring, and the lower surface around the base hole is received by a portion of the top end surface of the lower outer ring extending outwardly from the boundary of the upper outer ring.

5. The swing arm assembly according to claim 3, wherein a reduced diameter stepped portion of the outer diameter, larger than that of the upper outer ring, is formed around an upper shoulder of the lower outer ring, and wherein the swing arm is fitted by means of its base hole around a vertical outer peripheral surface of the reduced diameter stepped portion, and the lower surface around the base hole is received by a horizontal surface of said reduced diameter stepped portion.

6. The swing arm assembly according to claim 2, wherein said outer ring member comprises a one piece sleeve outer ring including, over an upper portion thereof, a thin reduced outer diameter portion and, over a lower portion thereof, a thick enlarged outer diameter portion, and wherein the swing arm is fitted by means of its base hole around an outer peripheral surface of said reduced diameter portion, and the lower surface around the base hole is received by an enlarged diameter stepped portion defined between said reduced diameter portion and said enlarged diameter portion.

7. The swing arm assembly according to claim 2, wherein said outer ring member comprises upper and lower outer rings and a spacer interposed therebetween, and wherein the upper outer ring and the spacer are smaller in diameter than that of the lower outer ring.

8. The swing arm assembly according to claim 7, wherein the swing arm is fitted by means of its base hole around an outer periphery of said spacer, and the lower surface around the base hole is received by a portion of a top end surface of the lower outer ring extending outwardly from the boundary of the spacer.

9. The swing arm assembly according to claim 7, wherein a reduced diameter stepped portion of the outer diameter, larger than that of the spacer, is formed around an upper shoulder of the lower outer ring, and wherein the swing arm is fitted by means of its base hole around a vertical outer peripheral surface of the reduced diameter stepped portion, and the lower surface around the base hole is received by a horizontal surface of said reduced diameter stepped portion.

10. The swing arm assembly according to claim 1, wherein said support member is a support shaft provided on the casing base of the hard disc drive device and extends upwardly therefrom.

11. The swing arm assembly according to claim 1, wherein said support member is a sleeve shaft fitted around the support shaft provided on the casing base of the hard disc drive device and extends upwardly therefrom.
